# EUROPEAN PATENT SPECIFICATION

(11) **EP 2 622 435 B1**
(45) Date of publication and mention of the grant of the patent: **25.07.2018**
(21) Application number: 11764250.4
(22) Date of filing: 13.09.2011
(51) Int. Cl.: G06F 3/02, H01H 13/705, H01H 13/86

(54) **A KEYPAD**
TASTATUR
CLAVIER

(30) Priority: 27.09.2010 GB 201016187
(43) Date of publication of application: 07.08.2013
(73) Proprietor: Davies, Sarah Jayne, Torpoint, Cornwall PL11 2LW (GB)
(72) Inventor: Davies, Sarah Jayne, Torpoint, Cornwall PL11 2LW (GB)
(74) Representative: Appleyard Lees IP LLP
(86) International application number: PCT/GB2011/051709
(87) International publication number: WO 2012/042241

(56) References cited:
- US-A- 1 385 356
- US-A- 4 084 214
- US-A- 4 253 774
- US-A- 4 322 587
- US-A- 5 302 970
- US-A- 5 822 703
- US-A1- 2001 038 766
- US-A1- 2005 224 326
- US-A1- 2007 199 804
- US-A1- 2009 262 492

## Description

The present invention relates to an improved keypad, suitable for use by a person having difficulty with fine motor control and/or physical co-ordination. Certain medical conditions, such as Parkinson's Disease, Cerebral Palsy and arthritis can adversely affect an individual's ability to perform many everyday tasks, and specialised equipment can often be purchased to assist individuals having such conditions.

A particular area of difficulty arises when trying to operate a computer keyboard. A standard computer keyboard has a great number of individual keys located in very close proximity to one another and successful operation of such a keyboard can be difficult or impossible for some people.

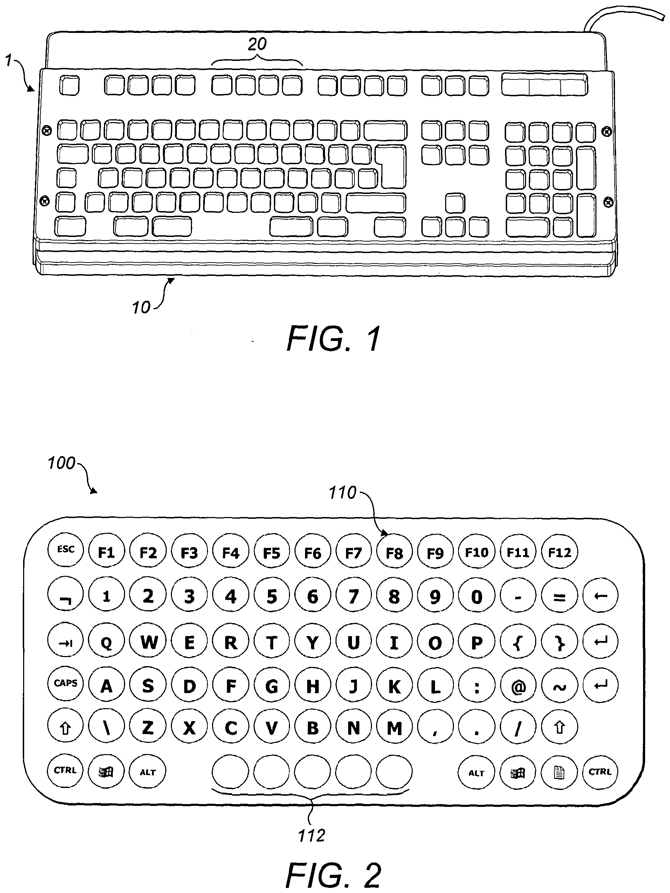

One particular solution employed in an attempt to address this problem with standard computer keyboards is to provide an additional element, known as a keyguard. This arrangement is shown in Figure 1. The keyguard 1 is arranged to fit above and couple to the standard keyboard 10. It comprises a plurality of apertures 20, each of which is arranged to overlay a key on the keyboard. In this way, a user is able to place a finger in the vicinity of a desired key, and by placing the tip of said finger into the aperture, suitable pressure can be applied to the desired key. By placing the finger in the aperture, in this way, any tremor in the user's finger can be ameliorated and there is less chance of accidentally actuating the wrong key.

However, there is at least one problem with the prior art keyguard arrangement. Prior art keyguards are often formed from a generally planar metallic sheet, in which the plurality of apertures has been formed. Often the edges of the apertures are quite rough and can result in injury, or at least discomfort, to the user's fingertips. Also, there is not a standard layout of computer keyboards and variations do occur between different models and manufacturers, and this can cause compatibility problems.

It is an aim of embodiments of the present invention to address these and other issues with the prior art.

According to the present invention there is provided an apparatus and method as set forth in the appended claims. Other features of the invention will be apparent from the dependent claims, and the description which follows.

The present invention relates to an improved keypad, suitable for use by a person having difficulty with fine motor control and/or physical co-ordination. Certain medical conditions, such as Parkinson's Disease, Cerebral Palsy and arthritis can adversely affect an individual's ability to perform many everyday tasks, and specialised equipment can often be purchased to assist individuals having such conditions.

A particular area of difficulty arises when trying to operate a computer keyboard. A standard computer keyboard has a great number of individual keys located in very close proximity to one another and successful operation of such a keyboard can be difficult or impossible for some people.

One particular solution employed in an attempt to address this problem with standard computer keyboards is to provide an additional element, known as a keyguard. This arrangement is shown in Figure 1. The keyguard 1 is arranged to fit above and couple to the standard keyboard 10. It comprises a plurality of apertures 20, each of which is arranged to overlay a key on the keyboard. In this way, a user is able to place a finger in the vicinity of a desired key, and by placing the tip of said finger into the aperture, suitable pressure can be applied to the desired key. By placing the finger in the aperture, in this way, any tremor in the user's finger can be ameliorated and there is less chance of accidentally actuating the wrong key.

However, there is at least one problem with the prior art keyguard arrangement. Prior art keyguards are often formed from a generally planar metallic sheet, in which the plurality of apertures has been formed. Often the edges of the apertures are quite rough and can result in injury, or at least discomfort, to the user's fingertips. Also, there is not a standard layout of computer keyboards and variations do occur between different models and manufacturers, and this can cause compatibility problems.

US 5,302,970 describes a base unit comprising an alpha-numeric keyboard with recessed keys. The recessed keys are described to make it physically impossible for the user to strike more than one key at a time while typing with one finger.

US 2001/0038766 A1 describes a computer keyboard including non-redundant keyse wherein each key has greater overall dimensions and a concave surface. Each key is described to be spaced apart from the adjacent keys by separating partitions that extend up above the height of each key to facilitate the guidance of the user's fingers during usage.

US 4,322,587 describes a keyboard which has a planar surface with depressions formed therein. Exertion of downward force on the base of the depressions is described to cause switch contacts to be closed with a snap-action to generate an information bearing signal.

US 4,253,774 describes an information output device comprising character output elements for visibly outputting at least one of characters such as letters, numbers, symbols, etc, a keyboard carrying thereon keys corresponding to the characters and usable for the selection of the characters, and a miniature body for containing therein the character output element and the keyboard.

US 4,084,214 describes a modular housing for electronic apparatus comprising a box-like base unit, two removable modules, and a read cover unit. In one arrangement, one of the removable modules is described to include a keyboard with a bezel provided for preventing the simultaneous depression of more than a single key.

US 5,822,703 describes a portable telephone which has external line reception keys and dial keys. Key protection projections are described to be provided for at least one of the external line keys and the dial keys.

US 2009/0262492 A1 describes a waterproof, submersible computer keyboard which can include true-type keys, a waterproof flexible internal keyboard switch membrane, a printed circuit board sealed in a waterproof airtight compartment housing that is sealed in a manner preventing failure of the waterproof seal from temperature and pressure changes associated with cleaning, submersion and machine washing.

US 2005/0224326 A1 describes a waterproof keyboard which includes a generally flat key panel supporting keytops thereon and membranes. Between the membranes and the key panel, a waterproof layer is described to be supported by a support base for sealing the membranes in cooperation with a base. The waterproof layer is described to be made from a sheet of flexible synthetic resin and be pressed with an elongate elastic member against he edge portion of the support base. The key panel is described to be fixed to the support base to cause the waterproof layer and the support base to seal the membranes.

US 2007/0199804 A1 describes a two-part cleanable keyboard which includes an upper keyboard portion with a plurality of keys. A lower support portion is described to include an impermeable moisture barrier. The two portions are described to be detached easily so the upper portion may be cleaned or sterilized after a first user, while a spare or additional upper portion is snap-fit onto the lower portion for use by a second user. The lower portion is also described to be cleaned or disinfected when the upper portion is changed.

It is an aim of embodiments of the present invention to address these and other issues with the prior art.

According to the present invention there is provided an apparatus and method as set forth in the appended claims. Other features of the invention will be apparent from the dependent claims, and the description which follows.

For a better understanding of the invention, and to show how embodiments of the same may be carried into effect, reference will now be made, by way of example, to the accompanying diagrammatic drawings in which:
Figure 1 shows a prior art keyboard and keyguard arrangement;
Figure 2 shows a top plan view of a keyboard according to an embodiment of the present invention;
Figure 3 shows a side sectional view through the keyboard of Figure 2;
Figure 4 shows a detailed cross-section of a single key; and
Figure 5 shows an alternative detailed cross-section of a single key.

Figure 2 shows a top plan view of a keyboard 100 according to an embodiment of the present invention. The layout of the keys resembles closely the standard QWERTY layout found on the vast majority of computer keyboards. The adjacent rows are not offset with respect to each other as they usually are in prior art regular keyboards, although in alternative embodiments of the invention they may be, if required.

The spacebar found on standard keyboards is replaced with a plurality of individual space keys 112, located along the bottom of the keyboard in approximately the position normally occupied by the spacebar. By providing several instances of the space key, the user is able to quickly and easily locate it.

The keyboard 100 is formed to be of unitary construction. It is constructed from a resilient material, such as rubber, silicone or other elastomeric or flexible material. The base of the keyboard may be composed of a rigid or flexible material, as required. One possible manufacturing technique for this construction comprises an injection moulding process for moulding the outer material, which facilitates the encapsulation of the inner electrical parts and ensures the desired shapes and profiles, such as recesses, can be placed on the exterior surface of the material. This further ensures that the electrical contacts which are required to signal that a particular key has been pressed are disposed within the outer material and are completely sealed from the exterior. The cable which connects the keyboard to the associated computer is also connected in a sealed manner, so that the electrical connections contained therein are not exposed at all. The only exposed electrical conductors are located in the extreme end of the cable, where the connecting plug is found. A protective cap may be provided to cover and seal any exposed electrical conductor so that the entire keyboard may be immersed in water without compromising its functionality. The cap may also be coupled to the connector so that it forms an integral part of the keyboard whilst ensuring it is not easily misplaced. This may be achieved by retaining the cap via an integrated cord, chain or other similar attachments.

This unitary construction, using a waterproof or at least water-resistant material has a further advantage, especially when such a keyboard is used in a communal or shared setting, such as a school. Many users of speciality equipment, such as embodiments of the present invention, produce excess saliva and can "drool". This saliva often finds its way onto the keyboard and, in prior art devices, such as that shown in Figure 1, the keyboard can fail prematurely. Furthermore, with shared devices, there may be hygiene issues associated with this problem. The unitary construction with waterproof or water-resistant material will enable a user or a carer of the user to easily clean the keyboard with a disinfectant or an antibacterial product and rinse the keyboard before drying it. To facilitate the drying process, the invention may further comprise a single or a plurality of grommets or eyelets so that the keyboard can easily be hung to dry, from a washing line or hooks for example. The grommets or eyelets may be made of metal, plastic or any other material which can provide the structural support and integrity required for hanging, and may be positioned on the body of the keyboard or on a tongue attached to the body of the keyboard.

Since embodiments of the present invention are essentially waterproof, they may simply be unplugged from the computer and rinsed under a tap or wiped down to remove any saliva or other accumulated dirt. All that is required is that the electrical connector, which is used to connect the keyboard to the computer, is kept dry but, as this is provided at the end of a length of cable, this is easily achieved. This robust construction of the present invention facilitates easy maintenance of the keyboard, ensuring high hygienic standards are maintained with minimal effort. The electrical connector may suitably be a USB or PS2 connector.

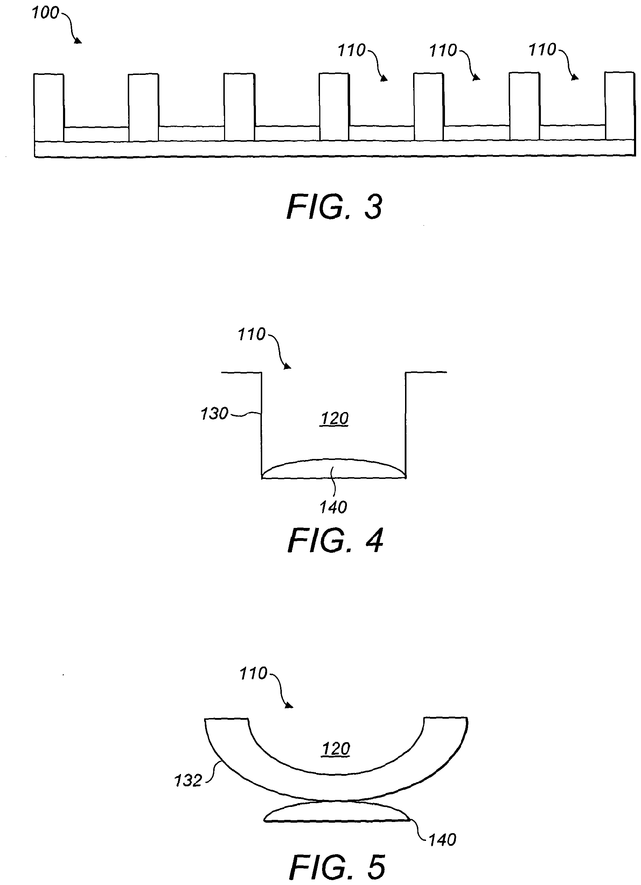

Figure 3 shows a sectional view through a column of the keyboard of Figure 2. Each key 110 of the keyboard 100 is arranged to be recessed so that it effectively sits at the bottom of an open cylinder 120. The keyboard is constructed in such a way that an interaction between a digit and the key takes place once the digit has been guided into the recess to a sufficient extent to provide a physical support in ensuring the intended key has been approached by the digit. Preferably typical dimensional parameters for achieving such a physical support would be a depth of approximately 1-3 cm for a recess with a width of approximately 1.5-3 cm. Depending on the severity of the person's condition a wider recess may be required to facilitate the person's digit accessing the correct recess for the intended key. For such wider recesses more depth may be required to ensure the interaction between the digit and the intended key takes place after the necessary physical support has been afforded, or even while such support is being afforded, by the depth and/or the sidewall profile of the recess. Although the recess depicted in the present embodiment is of a cylindrical shape, other recesses of an upside down conical, pyramidal, truncated cone/pyramid or other frustum shape can also be employed to the same effect. In each case the depth and/or the sidewall profile of the shape of the recess determines the physical support available to the user's digit in approaching the intended key. In use, a user positions a finger in the vicinity of one of the recesses surrounding each key and by pressing the finger into the recess, makes contact with the key at the bottom, thereby signalling a key press to the computer. The key can be arranged using known matrix switching techniques. Other forms of key actuation such as touch sensitive keys or positive feedback keys, where an audible click, a tactile feedback or any other form of detectable feedback is produced can also be used. Both audible and tactile feedbacks may be supplied by a flexed metal piece which has been forced into a curved shape under hogging moment. When the digit depresses the convex side of the curved surface, applying force against the hogging moment establishes points of contraflexure and the metal piece flexes against the hogging shape to establish an electrical contact between a pair of conductors positioned underneath the concave side of the curved surface. This establishment of the points of contraflexure provide the audible and tactile feedbacks arising from the flexing of the metal piece. Once the digit is removed from the surface, the metal piece will flex back to its initial hogging shape owing to the inherently present hogging moment, producing a further audible feedback of 'click'.

Figure 4 shows a more detailed cross-sectional view of a single key 110 from the keyboard 100. The user-actuable switch 140 is located at the bottom of an open cylinder 120, defined by a continuous sidewall 130. In the example embodiment shown in Figure 4, the switch 140 comprises a resiliently deformable dome, the depression of which is sensed to trigger a key press.

Figure 5 shows an alternative key structure to that shown in Figure 4. Whereas, in Figure 4, the user-actuable key is located at the bottom of a straight-sided cylinder, which acts to guide a finger to the key, in Figure 5, the aperture into which a user places a finger is shaped more like a shallow bowl 131. The depth of the bowl 131 may be chosen as required, but a depth of approximately 6mm is found to be acceptable.

The choice of key structure can be made according to one or more of a number of different criteria, which may include the degree of difficulty experienced by a particular user. For instance, a user with severe motor difficulty or tremors, may require a key of the form shown in Figure 4, where a high degree of guidance is provided by the structure. For a user with less difficulty in these areas, then the structure of Figure 5, which offers a somewhat lesser degree of guidance from the inherent structure may be preferred. The unifying feature is that the key is disposed within some form of recess which acts to guide the user's finger to the actual key.

Although other layouts of the keyboard are also supported by the present invention, in this embodiment the layout of the keyboard is selected to match as closely as possible a regular QWERTY keyboard, and function of 'F' keys can be provided at the top row of the keyboard. A numeric keypad can also be provided, if required, at the right hand side of the alphabetic keys. Special function keys, such as text editing keys and cursor keys can be provided to the right of the alphabetic keys (and to the left of the numeric keys, if provided).

The keyboard 100 can be provided in a range of different sizes, depending on the particular needs of a particular user. For users having the greatest trouble with fine motor control, a keyboard significantly larger than a regular keyboard can be provided. For users with better fine motor control or for those who wish to fit the keyboard to a mobility aid, such as a wheelchair, then a smaller keyboard can be provided.

The keys 110 are shown as having a circular profile. However, any shape which can tessellate is possible. For instance, a square shape could be used to define the keys, or they could be hexagonal, in the style of a honeycomb.

Embodiments of the present invention advantageously address problems associated with prior art keyboards fitted with keyguards. In particular, the softer material used to manufacture the keyboard minimises the risk of injury or discomfort to the user. Furthermore, the unitary construction from waterproof or water-resistant materials enables the keyboard to be easily cleaned to remove saliva, dirt or other debris, prolonging the life of the keyboard compared to prior art keyboards and addressing health concerns. The scope of the invention is defined by the appended claims.

## Claims

1. A waterproof unitary keypad (100) comprising a plurality of keys (110), wherein:
each of said plurality of keys comprises a user-actuable key (140), positioned at the bottom of a recess (120), whereby the recess (120) is arranged to guide a digit of the user to the user-actuable key (140); and
the keypad (100) is of unitary construction so that electrical contacts arranged to signal that a particular key has been pressed are completely sealed from the exterior of the keypad (100), **characterised in that** the means for achieving the said waterproof characteristic comprises complete concealment of any electrical contact from the exterior of the keypad and a protective cap for an exposed electrical conductor at the extreme end of a cable connecting the keypad to an associated computer.

2. The keypad of claim 1 wherein the keypad (100) is formed from an elastomeric material.

3. The keypad as claimed in claim 2 wherein the material is one of rubber, silicone or other flexible material.

4. The keypad as claimed in any preceding claim wherein the body of the keypad (100) comprises means for hanging the keypad to facilitate a drying process.

5. The keypad as claimed in claim 4 wherein the body of the keypad (100) comprises a tongue, the tongue comprising a grommet or eyelet for hanging the keypad (100).

6. The keypad as claimed in any preceding claim wherein the keypad (100) comprises a means for producing an audible click to alert the user of the interaction between the digit of the user and the user-actuable key (140).

7. The keypad as claimed in claim 6 wherein the feedback is provided by applying a force on a flexed metal piece comprising curved surfaces under hogging moment.

8. The keypad as claimed in any preceding claim wherein the recess (120) is in the form of a generally open configuration having an open upper portion and a continuous sidewall.

9. The keypad as claimed in claim 8 wherein the recess (120) has a depth of 1-3 cm and a width of 1.5-3 cm.

10. The keypad as claimed in any preceding claim wherein the plurality of keys (110) are arranged in a standard QWERTY arrangement.

11. The keypad as claimed in any preceding claim further comprising a numeric keypad.

12. The keypad as claimed in any preceding claim wherein a plurality of space keys (112) are provided.

13. A method for constructing the keypad of any preceding claim wherein an injection moulding process for moulding the outer material of the unitary construction is employed.

## Patentansprüche

1. Wasserdichte einheitliche Tastatur (100), aufweisend mehrere Tasten (110), wobei:
jede der mehreren Tasten eine vom Benutzer betätigbare Taste (140) aufweist, die am Boden einer Vertiefung (120) angeordnet ist, wobei die Vertiefung (120) so angeordnet ist, dass sie einen Finger des Benutzers zu der vom Benutzer betätigbaren Taste (140) führt; und
die Tastatur (100) einheitlich konstruiert ist, so dass elektrische Kontakte, die angeordnet sind, um zu signalisieren, dass eine bestimmten Taste gedrückt wurde, vollständig gegenüber dem Äußeren der Tastatur (100) abgedichtet sind, **dadurch gekennzeichnet, dass** die Mittel zum Erzielen der Wasserdichtigkeitseigenschaft eine vollständige Verdeckung eines elektrischen Kontakts gegenüber dem Äußeren der Tastatur, und eine Schutzkappe für einen freigelegten elektrischen Leiter an dem äußersten Ende eines Kabels, das die Tastatur mit einem zugehörigen Computer verbindet, aufweist.

2. Tastatur nach Anspruch 1, wobei die Tastatur (100) aus einem elastomeren Material gebildet ist.

3. Tastatur nach Anspruch 2, wobei das Material eines von Gummi, Silikon, oder einem anderen flexiblen Material ist.

4. Tastatur nach einem der vorhergehenden Ansprüche, wobei das Gehäuse der Tastatur (100) Mittel zum Aufhängen der Tastatur aufweist, um einen Trocknungsprozess zu erleichtern.

5. Tastatur nach Anspruch 4, wobei das Gehäuse der Tastatur (100) eine Zunge aufweist, wobei die Zunge eine Durchführung oder Öse zum Aufhängen der Tastatur (100) aufweist.

6. Tastatur nach einem der vorhergehenden Ansprüche, wobei die Tastatur (100) Mittel zum Erzeugen eines hörbaren Klicks aufweist, um den Benutzer auf die Interaktion zwischen dem Finger des Benutzers und der vom Benutzer betätigbaren Taste (140) aufmerksam zu machen.

7. Tastatur nach Anspruch 6, wobei das Feedback durch Anwenden einer Kraft auf ein gebogenes Metallstück, das gekrümmte Flächen unter einem Stützmoment aufweist, bereitgestellt wird.

8. Tastatur nach einem der vorhergehenden Ansprüche, wobei die Vertiefung (120) die Form einer allgemeinen offenen Konfiguration mit einem offenen oberen Abschnitt und einer durchgehenden Seitenwand aufweist.

9. Tastatur nach Anspruch 8, wobei die Vertiefung (120) eine Tiefe von 1 bis 3 cm und eine Breite von 1,5 bis 3 cm aufweist.

10. Tastatur nach einem der vorhergehenden Ansprüche, wobei die mehreren Tasten (110) in einer Standard-QWERTY-Anordnung angeordnet sind.

11. Tastatur nach einem der vorhergehenden Ansprüche, die ferner eine numerische Tastatur aufweist.

12. Tastatur nach einem der vorhergehenden Ansprüche, wobei mehrere Leertasten (112) vorgesehen sind.

13. Verfahren zur Herstellung der Tastatur nach einem der vorhergehenden Ansprüche, wobei ein Spritzgussverfahren zum Formen des Außenmaterials der einheitlichen Konstruktion verwendet wird.

## Revendications

1. Clavier monobloc étanche (100) comprenant une pluralité de touches (110), dans lequel :
chaque touche de ladite pluralité de touches comprend une touche actionnable par l'utilisateur (140), positionnée au fond d'un creux (120), moyennant quoi le creux (120) est conçu pour guider un doigt de l'utilisateur vers la touche actionnable par l'utilisateur (140) ; et
le clavier (100) est de construction monobloc de sorte que des contacts électriques conçus pour signaler qu'une touche particulière a été appuyée soient entièrement isolés de l'extérieur du clavier (100), **caractérisé en ce que** les moyens permettant d'obtenir ladite caractéristique d'étanchéité comprennent une dissimulation complète de tout contact électrique par rapport à l'extérieur du clavier et un capot protecteur pour un conducteur électrique apparent tout au bout de l'extrémité d'un câble connectant le clavier à un ordinateur associé.

2. Clavier selon la revendication 1, le clavier (100) étant formé d'un matériau élastomère.

3. Clavier selon la revendication 2 dans lequel le matériau est un parmi le caoutchouc, la silicone ou un autre matériau souple.

4. Clavier selon l'une quelconque des revendications précédentes dans lequel le corps du clavier (100) comprend des moyens pour suspendre le clavier afin de faciliter un processus de séchage.

5. Clavier selon la revendication 4 dans lequel le corps du clavier (100) comprend une languette, la languette comprenant un oeillet ou anneau pour suspendre le clavier (100).

6. Clavier selon l'une quelconque des revendications précédentes, le clavier (100) comprenant un moyen permettant de produire un clic sonore pour avertir l'utilisateur de l'interaction entre le doigt de l'utilisateur et la touche actionnable par l'utilisateur (140).

7. Clavier selon la revendication 6 dans lequel la rétroaction est procurée par l'application d'une force sur une pièce métallique fléchie comprenant des surfaces courbées sous un moment fléchissant négatif.

8. Clavier selon l'une quelconque des revendications précédentes dans lequel le creux (120) a la forme d'une configuration généralement ouverte ayant une partie supérieure ouverte et une paroi latérale continue.

9. Clavier selon la revendication 8 dans lequel le creux (120) a une profondeur de 1 à 3 cm et une largeur de 1,5 à 3 cm.

10. Clavier selon l'une quelconque des revendications précédentes dans lequel la pluralité de touches (110) est agencée dans un agencement QWERTY standard.

11. Clavier selon l'une quelconque des revendications précédentes comprenant en outre un clavier numérique.

12. Clavier selon l'une quelconque des revendications précédentes dans lequel une pluralité de touches espace (112) est prévue.

13. Procédé de construction du clavier selon l'une quelconque des revendications précédentes dans lequel un processus de moulage par injection permettant de mouler le matériau externe de la construction monobloc est utilisé.
